# EUROPÄISCHE PATENTSCHRIFT

(11) **EP 3 819 057 B1**
(45) Veröffentlichungstag und Bekanntmachung des Hinweises auf die Patenterteilung: **26.03.2025**
(21) Anmeldenummer: 20205455.7
(22) Anmeldetag: 03.11.2020
(51) Int. Cl.: B23G 7/02

(54) **WERKZEUG ZUR SPANLOSEN ERZEUGUNG ODER NACHBEARBEITUNG EINES GEWINDES, VERFAHREN ZUM HERSTELLEN DES WERKZEUGS UND VERFAHREN ZUM HERSTELLEN EINES GEWINDES**
TOOL FOR THE NON-CUTTING PRODUCTION OR FINISHING OF A THREAD, METHOD FOR MANUFACTURING THE TOOL AND METHOD FOR MANUFACTURING A THREAD
OUTIL D'USINAGE SANS ENLÈVEMENT DE COPEAUX OU D'USINAGE ULTÉRIEUR D'UN FILETAGE, PROCÉDÉ DE FABRICATION D'OUTIL ET PROCÉDÉ DE FABRICATION D'UN FILETAGE

(30) Priorität: 07.11.2019 DE 102019130009
(43) Veröffentlichungstag der Anmeldung: 12.05.2021
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: Hechtle, Dietmar, 91257 Pegnitz (DE); Übler, Marko, 91207 Lauf (DE); Fenzel, Jürgen, 91245 Simmelsdorf (DE)
(74) Vertreter: Meissner Bolte Nürnberg

(56) Entgegenhaltungen:
- EP-A1- 1 669 149
- EP-A2- 1 616 652
- DE-A1- 102006 036 434
- DE-A1- 102014 112 164

## Beschreibung

Die Erfindung betrifft ein Werkzeug zur spanlosen Erzeugung oder Nachbearbeitung eines Gewindes, ein Verfahren zum Herstellen des Werkzeugs und ein Verfahren zum Herstellen eines Gewindes.

Ein Kugelgewindetrieb ist ein Schraubgetriebe mit zwischen Schraube und Mutter eingefügten Kugeln. Beim Drehen zwischen Schraube und Mutter rollen die Kugeln in einem entsprechenden Kugelgewindegang (oder auch: Kugelgewindenut). Ein solcher Kugelgewindegang wird herkömmlicherweise mit Hilfe von Schleifstiften hergestellt. Das bekannte Verfahren ist zeitaufwändig. Ein solches Kugelgewinde muss eine hohe Genauigkeit aufweisen. Eine hohe Genauigkeit kann nur dann erzielt werden, wenn das gefertigte Gewinde auch vermessen werden kann.

Zum Vermessen eines solchen Gewindes sind Tastschnittgeräte z.B. aus der DE 199 47 001 A1, DE 10 2013 015 237 A1 oder DE 10 2017 103 954 A1 bekannt. Eine solche abtastende Messung weist nach wie vor eine höhere Genauigkeit als eine optische Vermessung auf. Zur Verwendung eines Tastschnittgeräts muss die zu vermessende Linie gewisse Eigenschaften aufweisen, insbesondere können vorspringende Bereiche der Oberfläche die Ausrichtung des Tasters zur Oberfläche behindern. Ein Tastschnittgerät weist einen Tastfinger mit einem Tastkopf auf. Dieser Tastfinger wird entlang einer Messlinie geführt. Eine Messlinie bei einem Innengewinde verläuft insbesondere parallel zur Gewindeachse.

Nach dem Stand der Technik ist ein Gewindefurcher zum spanlosen Erzeugen oder Nachbearbeiten eines Gewindes bekannt. Bei diesen Werkzeugen erfolgt die Gewindeerzeugung spanlos mittels Umformung des Werkstücks, indem sogenannte Drückstollen, auch als Formkeile oder Zähne bezeichnet, durch Druck eine Kaltverformung des Werkstücks bewirken. Ein solcher Drückstollen weist Flanken auf. Der Vorteil dieser Werkzeuge ist, dass durch die Verformung der Oberfläche und die damit verbundene Verfestigung die Härte des Werkstoffs im Bereich des Gewindeprofils ansteigt und somit ein verschleißfesteres Gewinde als bei spanender Gewindeerzeugung entsteht.

Bekannte Gewindefurcher, insbesondere zur Innengewindeerzeugung, umfassen einen Schaft und einen Arbeitsbereich. Der Schaft ist in der Regel zylindrisch ausgeführt und mit seinem dem Werkstück abgewandten Ende im Spannfutter einer Gewindeerzeugungseinrichtung aufgenommen und gehalten. Der Arbeitsbereich, insbesondere der Formungsbereich, befindet sich auf der dem Schaft gegenüberliegenden Seite des Gewindefurchers.

Der Formungsbereich ist mit einer entlang des Umfangs spiralförmig umlaufenden Formgebungskurve versehen, entlang derer als Erhöhungen die Drückstollen ausgebildet sind.

Bei einem aus der DE 10 2012 100 734 A1 bekannten Gewindefurcher ist der Teilungswinkel zwischen zwei jeweils entlang der Formgebungskurve aufeinanderfolgenden Drückstollen für alle Drückstollen gleich groß. Eine gedachte geradlinige Verbindungslinie zwischen den Spitzen der Drückstollen entlang der Formgebungskurve bildet in einer Projektion auf eine Fläche senkrecht zur Werkzeugachse bis auf radiale Abweichungen im Wesentlichen ein regelmäßiges n-Eck (Polygon), wobei n Drückstollen pro Umlauf der Formgebungskurve um die Werkzeugachse angeordnet sind. Jeder n-te Drückstollen ist entlang einer Geraden parallel zur Werkzeugachse angeordnet. Diese entlang einer Geraden angeordneten Drückstollen bilden einen sogenannten Drücksteg. Weiterhin ist aus der DE 10 2012 100 734 A1 auch ein Gewindefurcher mit jeweils unterschiedlichen Teilungswinkeln bekannt.

Bei bekannten Gewindefurchern weisen die Drückstollen ein Profil auf, welches senkrecht zu einer Formgebungskurve bestimmt wird. Ein Drückstollen weist insbesondere in einem oberen Bereich des Drückstollen ein dreieckiges, ovales oder zylinderförmiges Profil auf. Ein solches Profil steht senkrecht zum Verlauf der Formgebungskurve. Ein Schnitt senkrecht zur Formgebungskurve wird weiterhin als Normalschnitt bezeichnet. Bei Formgebungskurven mit einer Gewindesteigung heißt das, dass das Profil im Normalschnitt um den Steigungswinkel a gekippt zu einer Fläche, die eine Drehachse des Gewindefurchers umfasst, dem Achsschnitt, steht. Die die Drehachse enthaltende Ebene (Achsschnittebene) ist eine r-z-Ebene in einem Zylinderkoordinatensystem. Der Steigungswinkel α liegt in der θ-z-Ebene, wobei θ die Winkelkoordinate des Koordinatensystems ist. Bei α=0° hat die Kurve keine Steigung, sondern es handelt sich um einen Umlauf senkrecht zur Drehachse. α=90° entspricht der Richtung der Drehachse.

Ein solches Profil lässt sich mit einem bekannten Tastschnittgerät nicht in ausreichender Genauigkeit messen. Insbesondere lässt sich bei bekannten, insbesondere polygonal ausgebildeten, Gewindefurchern das Profil entlang der Drückstollen nicht mit ausreichender Genauigkeit messen.

Aus der EP 1 669 149 A1 ist ein Werkzeug gemäß dem Oberbegriff des Anspruchs 1 und ein Verfahren zur Erzeugung eines Gewindes in einem Werkstück bekannt. Das Werkzeug weist Gewindeformzähne und Gewindefräszähne auf. Die Gewindeformzähne weisen abschnittsweise einen gleichbleibenden Radius auf.

Aus der DE 10 2006 036434 A1 ist auch ein Werkzeug gemäß dem Oberbegriff des Anspruchs 1 bekannt. Dieses Werkzeug weist Gewindeformzähne auf, die abschnittsweise einen veränderlichen Radius aufweisen.

Eine Aufgabe der Erfindung ist es, ein Werkzeug zur spanlosen Erzeugung oder Nachbearbeitung eines Gewindes bereitzustellen, welches eine höhere Genauigkeit aufweist. Eine weitere Aufgabe der Erfindung ist ein Verfahren zur Erzeugung eines Gewindes anzugeben, welches sich genauer mit einem Tastschnittgerät messen lässt, und ein Verfahren zum Herstellen eines Gewindewerkzeugs zum Herstellen eines solchen Gewindes anzugeben.

Die Aufgabe wird hinsichtlich des Werkzeugs gelöst durch ein erfindungsgemäßes Werkzeug nach Anspruch 1 zur spanlosen Erzeugung oder Nachbearbeitung eines Gewindes, insbesondere Kugelgewindes, in oder an einem Werkstück, insbesondere einen Gewindefurcher oder Gewindeformer. Das Werkzeug umfasst mindestens einen um eine Werkzeugachse drehbaren oder drehenden Formungsbereich zur spanlosen Erzeugung oder Nachbearbeitung des Gewindes, insbesondere eines Innengewindes. Der Formungsbereich weist mehrere radial von der Werkzeugachse weg nach außen ragende oder vorstehende Drückstollen auf zum Erzeugen oder Nachbearbeiten des Gewindes durch Eindrücken der Drückstollen in die Werkstückoberfläche. Die Drückstollen sind entlang einer die Werkzeugachse spiralförmig, insbesondere im Wesentlichen spiralförmig, umlaufenden Formgebungskurve aufeinanderfolgend angeordnet. Die Steigung der Formgebungskurve entspricht, genau oder mit kleinen Abweichungen, der Steigung des zu erzeugenden oder nachzuarbeitenden Gewindes, wobei die Formgebungskurve einen Steigungswinkel α aufweist. Erfindungsgemäß ist ein Profil zumindest eines Drückstollens so ausgelegt, dass ein erzeugter Gewindegang in einem die Werkzeugachse enthaltenden Achsschnitt zumindest abschnittsweise rundbogenförmig oder spitzbogenförmig ist. Ein Schnitt, der die Drehachse des Gewindefurchers umfasst, ist der Achsschnitt. Bei Formgebungskurven mit einer Gewindesteigung heißt das, dass das Profil im Normalschnitt um den Steigungswinkel a gekippt zu einer Fläche, die eine Drehachse des Gewindefurchers umfasst, dem Achsschnitt, steht. Vorzugsweise sind die Profile mehrerer Drückstollen oder aller Drückstollen derart ausgelegt. Durch die rundbogenförmige oder spitzbogenförmige Form lässt sich die Oberfläche im Achsschnitt besser mit dem Tastkopf erreichen und die Messgenauigkeit wird erhöht.

Ferner ist erfindungsgemäß einer der Drückstege entlang der Formgebungskurve länger als die anderen Drückstege, wobei der längere Drücksteg, ein zweiter Drücksteg, die Länge von einem 1,5 - 2,5-fachen überstrichenen Winkel θ aufweist als die kürzeren, ersten Drückstege. In einer zweckmäßigen Ausgestaltung entspricht somit der längere Drücksteg im Wesentlichen, insbesondere genau, zwei benachbarten Drückstegen ohne dazwischenliegende Schmiernut.

Unter rundbogenförmig wird insbesondere zylinderförmig, oval oder konvex mit veränderlichem Radius verstanden. Unter spitzbogenförmig wird insbesondere eine gotische Bogenform mit einheitlichem oder veränderlichem Radius verstanden. Die Spitze des Spitzbogens kann abgerundet sein. In einer Ausgestaltung kann ein veränderlicher Radius ein Profil sein, welches verschiedene Abschnitte mit unterschiedlichen Radien, z.B. zwei bis fünf unterschiedliche Radien, aufweist und welches insbesondere dazwischen Übergangsbereiche aufweist, so dass sich die Krümmung von einem ersten Radius zu einem zweiten Radius ändert.

Erfindugsgemäß ist ein Profil zumindest eines ersten Drückstollens zumindest abschnittsweise, insbesondere vollständig, rundbogenförmig oder spitzbogenförmig in einem die Werkzeugachse enthaltenden Achsschnitt. Insbesondere weist der radial äußere Bereich eines ersten Drückstollens, zweckmäßigerweise ein eine Drückstollenspitze enthaltender Bereich, ein rundbogenförmiges oder spitzbogenförmiges Profil auf. Insbesondere ist das Profil eines aus: Rundbogenförmig, spitzbogenförmig, spitzbogenförmig mit abgerundeter Spitze, spitzbogenförmig mit einem ersten Radius im Bereich der Spitze und einem zweiten Radius im Bereich der Flanken, spitzbogenförmig mit verlängerten Schenkeln. Zwei im Achsschnitt benachbarte Drückstollen können durch eine Nut getrennt sein. Eine solche Nut kann im Achsschnitt insbesondere plan oder konkav ausgeführt sein.

In weiterer Ausgestaltung umfasst das Werkzeug insbesondere zwei oder drei oder vier oder fünf oder sechs oder mehr Drückstollen Die Drückstollen sind in zumindest zwei Drückstegen angeordnet. Ein solcher Drücksteg wird im Sinne dieser Erfindung durch eine Mehrzahl von Drückstollen gebildet. Dabei handelt es sich insbesondere um einen geraden Drücksteg, in dem jeder n-te Drückstollen entlang einer Geraden parallel zur Werkzeugachse angeordnet ist, d.h. in einem Winkel von 360°. Insbesondere sind die ersten Drückstollen in einem Drücksteg angeordnet. Ein Drücksteg mit mehreren ersten Drückstollen, insbesondere mit ausschließlich ersten Drückstollen im Formungsbereich, ist ein erster Drücksteg. Somit weisen die ersten Drückstollen im Achsschnitt ein rundbogenförmiges oder spitzbogenförmiges Profil, insbesondere in einem die Drückstollenspitze enthaltenden Bereich, auf. In dieser Ausgestaltung lässt sich das Profil des Werkzeugs entlang der Werkzeugachse, insbesondere entlang der Drückstollenspitzen, besonders gut mit einem Tastschnittgerät messen.

Durch geometrische Umrechnung lässt sich dann präzise die Form des zu erzeugenden Gewindegangs berechnen, bzw. aus der Form des zu erzeugenden Gewindes und dem damit benötigten Profil im Normalschnitt lässt sich das korrespondierende Profil im Achsschnitt berechnen.

Insbesondere kann es sich bei dem längeren zweiten Drücksteg, um einen Drücksteg mit mehreren zweiten Drückstollen, insbesondere mit ausschließlich zweiten Drückstollen im Formungsbereich, handeln. Das Werkzeug umfasst insbesondere genau einen zweiten Drücksteg und mehrere erste Drückstege. Erste und zweite Drückstege haben zweckmäßigerweise ein ähnliches oder gleiches Profil.

In Ausgestaltung weist das Werkzeug zumindest einen, insbesondere mehrere Kühlkanäle auf, welche insbesondere je eine Austrittsöffnung in einem schaftseitigen Abschnitt des Formungsbereichs aufweisen.

In weiterer Ausgestaltung weist zumindest ein Teil der Drückstollen, insbesondere die ersten und/oder zweiten Drückstollen, einen Anfurchbereich auf und/oder einen Freibereich auf. Im Anfurchbereich erhöht sich die Höhe des Drückstollens in radialer Richtung, im Freibereich erniedrigt sich die Höhe des Drückstollens in radialer Richtung, so dass hier ein Freiwinkel vorliegt. Der Anfurchbereich liegt in Drehrichtung entlang der Formgebungskurve vor der Drückstollenspitze. Der Freibereich liegt in Drehrichtung hinter der Drückstollenspitze.

Der Anfurchbereich und/oder Freibereich kann einem Polygonverlauf folgen. Der Anfurchbereich geht mittels eines Übergangsbereichs in den Bereich der Drückstollenspitze über und/oder der Bereich der Drückstollenspitze geht mittels eines weiteren Übergangsbereichs in den Freibereich über. Insbesondere kann der Anfurchbereich einen Furchwinkel im Bereich von 5° bis 17°, insbesondere 12°, aufweisen.

In Ausgestaltung umfasst der Formungsbereich einen Formgebungsbereich und einen Kalibrierbereich, wobei die Formgebungskurve im Formgebungsbereich insbesondere einen bis drei Umläufe aufweist und die Formgebungskurve im Kalibrierbereich insbesondere zwei bis zwanzig, vorzugsweise fünf bis zehn Umläufe aufweist. In einer weiteren Ausgestaltung kann der Kalibierbereich kegelförmig ausgestaltet sein, so dass der Durchmesser des Kalibierbereichs zum Schaft hin zunimmt. Das Kegelverhältnis kann zum Beispiel 1:1000 sein.

Mit dem erfindungsgemäßen Verfahren gemäß Anspruch 9 zur spanlosen Erzeugung oder Nachbearbeitung eines Gewindes, insbesondere Kugelgewindes, vorzugsweise eines Innengewindes, mit einem erfindungsgemäßen Werkzeug kann ein Gewinde erzeugt werden, wobei das Gewinde eine Gewindesteigung mit einem Steigungswinkel α aufweist und zum Abtasten mit einem an sich bekannten Tastschnittgerät geeignet ist. Das erfindungsgemäße Verfahren hat den Vorteil, dass die Gewinde eine hohe Genauigkeit aufweisen und mit einem geringeren Zeitaufwand hergestellt werden können.

Ein erzeugter Gewindegang ist in einem die Werkzeugachse enthaltenden Schnitt zumindest abschnittsweise rundbogenförmig oder spitzbogenförmig, insbesondere zylinderförmig.

Das Gewinde wird in Ausgestaltung erst vorgeschnitten und dann nachgeformt.

Das erfindungsgemäße Verfahren gemäß Anspruch 11 ist zum Herstellen eines erfindungsgemäßen Werkzeugs zur spanlosen Erzeugung oder Nachbearbeitung eines Gewindes, insbesondere Kugelgewindes, in oder an einem Werkstück, insbesondere Gewindefurcher oder Gewindeformer geeignet. Dabei umfasst das Verfahren die folgenden Schritte: Bereitstellen eines Rohlings und Ausfräsen oder Schneiden der Drückstollen oder Bereitstellen eines Schaftes und Aufbauen der Drückstollen mit einem additiven Verfahren, insbesondere 3-D-Drucken.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Dabei zeigen
- Fig. 1: eine Ansicht eines Ausführungsbeispiels eines erfindungsgemäßen Gewindefurchers,
- Fig. 2: eine weitere Ansicht des Ausführungsbeispiels aus Fig. 1 des Gewindefurchers,
- Fig. 3: eine Ansicht des Ausführungsbeispiels aus Fig. 1 auf eine Spitze des Gewindefurchers,
- Fig. 4: das Profil eines Drückstollens entlang der Formbildungskurve,
- Fig. 5: ein Gewindeprofil
- Fig. 6: eine Überlagerung eines Profils eines Drückstollens im Achsschnitt und Normalschnitt
- Fig. 7 a, b, c: verschiedene Spitzbogenprofile eines Drückstollens, und
- Fig. 8 a, b: verschiedene Spitzbogenprofile eines Drückstollens.

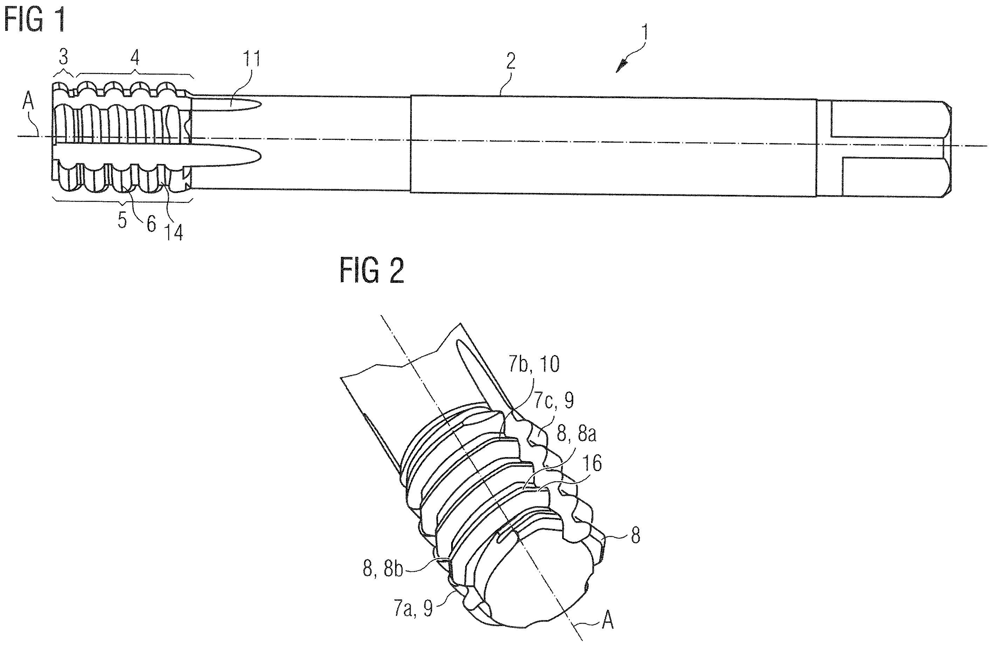

Der Gewindefurcher 1 in Fig. 1 weist einen Schaft 2 und einen Formungsbereich 5 auf. Der Schaft ist zumindest abschnittsweise zylindrisch ausgeführt und weist an einem vom Formungsbereich 5 abgewandten Ende hier ein Vierkantprofil auf, welches zur Aufnahme in einem Spannfutter einer Gewindeerzeugungsvorrichtung geeignet ist. Der Gewindefurcher hat eine Werkzeugachse A, welche Drehachse ist.

Der Formungsbereich 5 unterteilt sich in einen einer Werkzeugspitze zugewandten Formgebungsbereich 3 und einen Kalibierbereich 4. Im Formungsbereich 5 sind Drückstollen 7 in Drückstegen 9, 10 angeordnet. Bei den Drückstegen 9, 10 handelt es sich um gerade Drückstege. Die Drückstollen 7 liegen auf einer spiralförmigen Formgebungskurve 6, welche einen Steigungswinkel a aufweist. Dabei weisen die Drückstollen 7 im Kalibrierungsbereich 4 eine größere radiale Höhe auf als im Formgebungsbereich 3. Zwischen zwei benachbarten Drückstegen 9, 10 ist jeweils eine Schmiernut 11 angeordnet. Die Drückstege 9, 10 sowie die Schmiernuten 11 verlaufen parallel zu einer Werkzeugachse A.

Benachbarte Drückstollen 7 in einem Drücksteg 9, 10 stoßen nicht unmittelbar aneinander, sondern sind durch eine Nut 14, welche in der gezeigten Ausführungsform im Achsschnitt plan ausgeführt ist, voneinander getrennt. Die Nut 14 verläuft hier parallel zur Formgebungskurve 6. Ein Drücksteg 7 weist parallel zur Werkzeugachse ein Profil 20 auf, d.h. ein Profil im Achsschnitt. Dieses Profil 20 wird in Richtung der Werkzeugachse von einer Profilbegrenzungskurve 21a begrenzt. Zwei Profilbegrenzungskurven benachbarter Drückstollen 7 stoßen hier nicht aneinander, sondern enden jeweils an der Nut 14. In einem Schnitt senkrecht zur Formgebungskurve 6, d.h. Normalschnitt, weist derselbe Drücksteg bei einem Steigungswinkel ungleich null eine abweichende Profilbegrenzungskurve 21b auf. In einer nicht dargestellten alternativen Ausführungsform können benachbarte Drückstollen auch ohne Nut aneinanderstoßen, oder mittels einer sich zur Schaftachse verjüngenden, d.h. konkaven Nut, getrennt sein. Im ersten Fall enden die jeweiligen Profilbegrenzungskurven dann an der Stoßstelle oder am Übergang zur konkaven Nut.

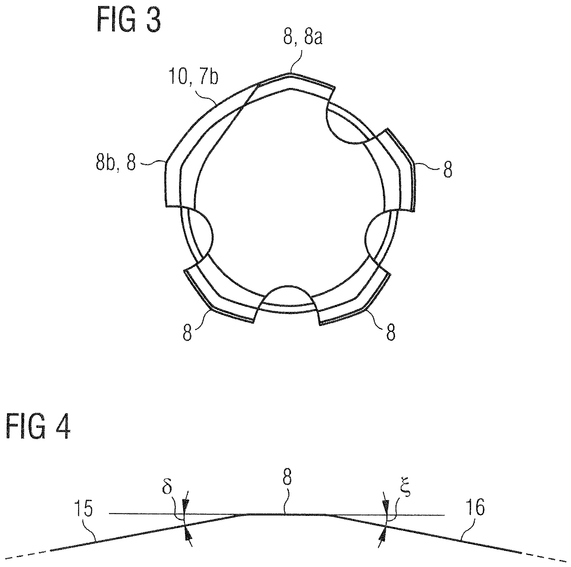

Wie in Fig. 2 und insbesondere Fig. 3 sichtbar ist, haben die Drückstege 9, 10 eine unterschiedliche Länge. In der Ansicht auf die Werkzeugspitze in Fig. 3 weist der Gewindefurcher 1 eine Polygonform, hier mit fünf Ecken, auf. Jeder der Drückstege 9 umfasst eine Polygonecke. Die Drückstege 9 mit den Drückstollen 7a und 7c weisen eine erste Länge auf und umfassen jeweils genau eine Polygonecke. Es handelt sich um erste Drückstege 9 mit ersten Drückstollen 7a, 7c. Der Drücksteg 10 mit den Drückstollen 7b weist eine größere Länge auf und umfasst zwei Polygonecken. Es handelt sich um einen zweiten Drücksteg 10 mit zweiten Drückstollen 7b. Der Bereich der Polygonecke jedes Drückstollens bildet eine Drückstollenspitze 8, welche einen größeren radialen Abstand zur Werkzeugachse A aufweist als die übrigen Bereiche des Drückstollens. Der zweite Drückstollen 7b weist die Drückstollenspitzen 8a und 8b auf, wobei die Drückstollenspitze 8a auf der Formgebungskurve hinter der Drückstollenspitze 8b liegt. Die Drückstollenspitzen 8a und 8b können unterschiedliche radiale Abstände zur Werkzeugachse aufweisen.

Dabei weist der kürzere erste Drückstollen 7a und/oder der längere zweite Drückstollen 7b mit einem Anfurchbereich 15 und einem Freibereich 16, wie in Fig. 4 dargestellt, insbesondere einen ersten Furchwinkel δ auf. Zur Polygonecke hin ist ein Übergangsbereich ausgebildet. Die Drückstollenspitze 8 weist einen gekrümmten oder glatten Bereich entlang der Formgebungskurve 6 auf und in einer um α zur senkrechten Ebene gekippten Ebene, d.h. im Achsschnitt, ein zylindrisches Profil, somit hier Rundbogenprofil, auf und geht über einen weiteren Übergangsbereich in einen Freibereich mit einem Freiwinkel ξ über. Der Freiwinkel ξ entspricht hier im Beispiel im Wesentlichen dem Furchwinkel δ, insbesondere dem Furchwinkel ±5°.

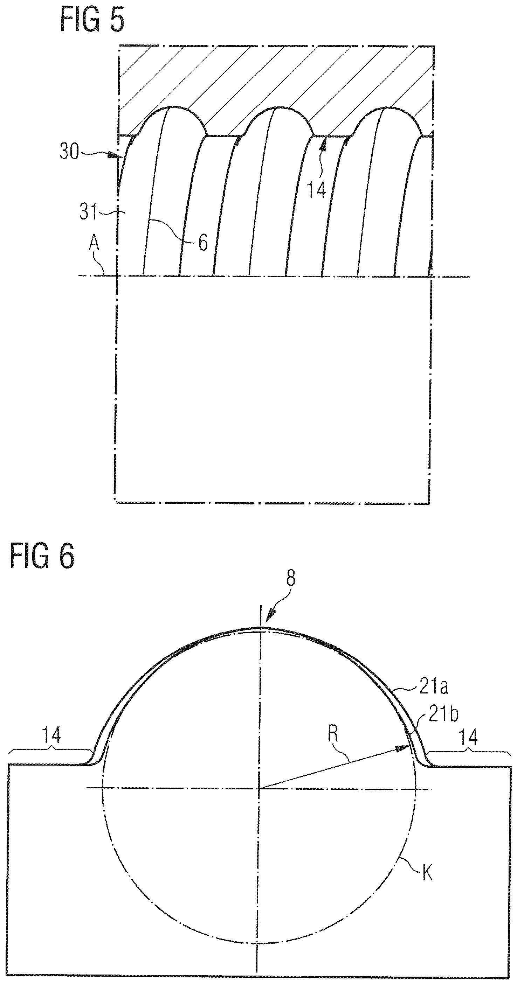

Fig. 5 zeigt ein Gewindeprofil 30, wobei sich der Gewindegang 31 entlang der Formgebungskurve 6 windet. Im Normalschnitt N, d.h. in einer um den Steigungswinkel α zum Achsschnitt gekippten Ansicht, weist das gezeigte Gewindeprofil ein rundbogenförmiges Profil, insbesondere zylindrisches Profil, auf.

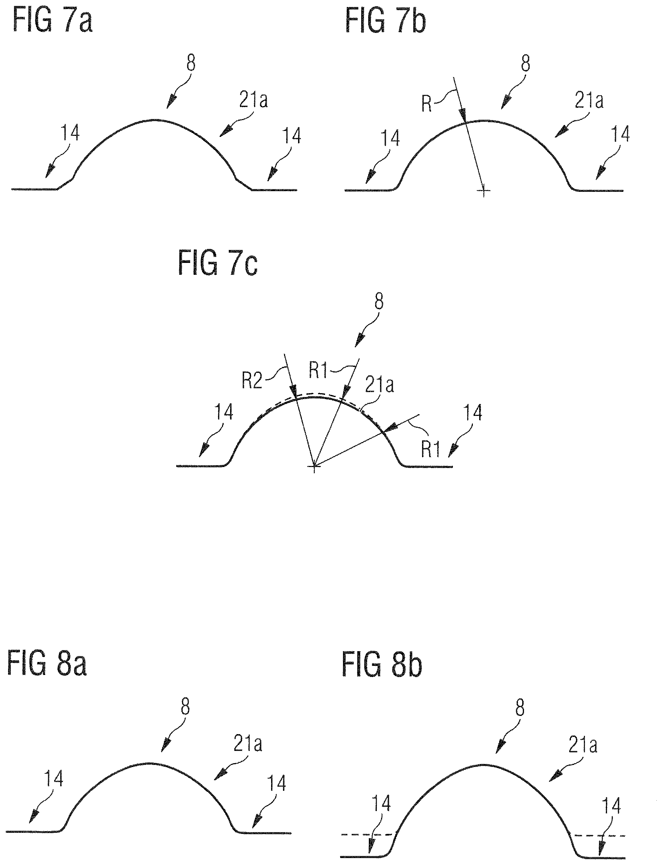

Die Fig. 6 bis 8 zeigen weitere Profile eines Drückstollens, insbesondere im Bereich einer Drückstollenspitze, im Normalschnitt bzw. im Achsschnitt. Fig. 6 zeigt eine zweite Ausgestaltung eines Profils eines Drückstollen in einer Überlagerung aus Normalschnitt und Achsschnitt. Der Kreisbogen K dient nur als visuelle Stütze und vereinfacht das Erkennen des sich verändernden Radius entlang der Profilbegrenzungskurven 21a und 21b. Die Profilbegrenzungskurve 21a stellt die Profilbegrenzungskurve im Achsschnitt dar, während die Profilbegrenzungskurve 21b die Profilbegrenzungskurve im Normalschnitt darstellt. Beide Profilbegrenzungskurven 21a, 21b sind spitzbogenförmig ausgebildet. Die beiden Profilbegrenzungskurven 21a, 21b unterscheiden sich in einem der jeweiligen Nut 14 zugewandten unteren Bereich. Die Fig. 7a zeigt ein spitzbogenförmiges Profil im Achsschnitt, während die Fig. 7b ein spitzbogenförmiges Profil im Achsschnitt mit abgerundeter Spitze zeigt. Die Fig. 7c zeigt ein weiteres spitzbogenförmiges Profil im Achsschnitt, bei dem in Abweichung zu den vorher gezeigten Profilen der Radius im der jeweiligen Nut 14 zugewandten Bereich ein Radius R1 ist und der im Bereich der Spitze des Spitzbogens in einen Radius R2 übergeht, wobei R1<R2.

Fig. 8a und 8b zeigen eine weitere Ausgestaltung eines Drückstollenprofils insbesondere im Bereich einer Drückstollenspitze. Die zwei Schenkel des Spitzbogens weisen hier einen gleichmäßigen Radius in Fig. 8a auf. In Fig. 8b vergrößert sich der Radius der Schenkel in einem der Nut 14 zugewandten Bereich, so dass die Schenkel tangential verlängert sind.

### Bezugszeichenliste

| | | | |
|---|---|---|---|
| 1 | Werkzeug | 15 | Anfurchbereich |
| 2 | Schaft | 16 | Freibereich |
| 3 | Formgebungsbereich | 20 | Profil |
| 4 | Kalibrierbereich | 21a | erste Profilbegrenzungskurve |
| 5 | Formungsbereich | 21b | zweite Profilbegrenzungskurve |
| 6 | Formgebungskurve | 30 | Gewindeprofil |
| 7, | Drückstollen | 31 | Gewindegang |
| 7a, 7 c | erste Drückstollen | A | Werkzeugachse |
| 7b | zweite Drückstollen | N | Normalschnittebene |
| 8 | Drückstollenspitze | α | Steigungswinkel |
| 9 | erster Drücksteg | δ | Furchwinkel |
| 10 | zweiter Drücksteg | ξ | Freiwinkel |
| 11 | Schmiernut | θ | Winkel des zylindrischen Koordi- |
| 12 | Kühlkanalausgang | | natensystems |
| 14 | Nut | K | Kreisbogen |

## Patentansprüche

1. Werkzeug (1) zur spanlosen Erzeugung oder Nachbearbeitung eines Gewindes, insbesondere Kugelgewindes, in oder an einem Werkstück, insbesondere Gewindefurcher oder Gewindeformer, umfassend mindestens einen um eine Werkzeugachse (A) drehbaren oder drehenden Formungsbereich (5) zur spanlosen Erzeugung oder Nachbearbeitung des Gewindes, insbesondere eines Innengewindes,
wobei der Formungsbereich (5) mehrere radial von der Werkzeugachse (A) weg nach außen ragende oder vorstehende Drückstollen (7, 7a, 7b, 7c) aufweist zum Erzeugen oder Nachbearbeiten des Gewindes durch Eindrücken der Drückstollen (7, 7a, 7b, 7c) in die Werkstückoberfläche,
wobei die Drückstollen (7, 7a, 7b, 7c) entlang einer die Werkzeugachse (A) spiralförmig umlaufenden Formgebungskurve (6) aufeinanderfolgend angeordnet sind, und
wobei die Steigung der Formgebungskurve (6) der Steigung des zu erzeugenden oder nachzuarbeitenden Gewindes entspricht,
wobei die Formgebungskurve einen Steigungswinkel (a) aufweist, und
wobei ein Profil zumindest eines Drückstollens (7, 7a, 7b, 7c) zumindest abschnittsweise rundbogenförmig oder spitzbogenförmig in einem die Werkzeugachse (A) enthaltenen Achsschnitt ist, wobei die Drückstollen (7, 7a, 7b, 7c) in zumindest zwei Drückstegen (9, 10) angeordnet sind,
**dadurch gekennzeichnet, dass** einer der zumindest zwei Drückstege (9, 10) ein erster Drücksteg (9) und ein weiterer ein zweiter Drücksteg (10) ist, wobei der zweite Drücksteg (10) länger entlang der Formgebungskurve (6) als der oder die ersten Drückstege (9) ist, wobei der zweite Drücksteg (10) die Länge von einem 1,5 - 2,5-fachen überstrichenen Winkel θ aufweist als die kürzeren ersten Drückstege (9).

2. Werkzeug (1) nach Anspruch 1, wobei insbesondere das Profil des zumindest einen Drückstollens im Bereich einer Drückstollenspitze (8) rundbogenförmig oder spitzbogenförmig, insbesondere zylinderförmig, in einem die Werkzeugachse (A) enthaltenen Achsschnitt ist.

3. Werkzeug (1) nach Anspruch 2, wobei das Profil eines, oder mehrerer oder aller Drückstollen (7, 7a, 7b, 7c) ausgesucht ist aus einem der folgenden Profile: Rundbogenförmig, spitzbogenförmig, spitzbogenförmig mit abgerundeter Spitze, spitzbogenförmig mit einem ersten Radius im Bereich der Spitze und einem zweiten Radius im Bereich der Flanken, spitzbogenförmig mit verlängerten Schenkeln.

4. Werkzeug (1) nach einem der vorhergehenden Ansprüche, wobei das Werkzeug (1) insbesondere zwei oder drei oder vier oder fünf oder sechs oder mehr Drückstollen (7, 7a, 7b, 7c) umfasst.

5. Werkzeug (1) nach einem der vorhergehenden Ansprüche, wobei das Werkzeug (1) Kühlkanäle (12) aufweist, welche insbesondere jeweils in eine Austrittsöffnung in einem schaftseitigen Abschnitt des Formungsbereichs (5) aufweisen.

6. Werkzeug (1) nach einem der vorhergehenden Ansprüche, wobei zumindest ein Teil der Drückstollen (7, 7a, 7b, 7c) einen Anfurchbereich (15) aufweist und/oder einen Freibereich (16) aufweist, wobei optional der Anfurchbereich (15) und/oder Freibereich (16) einen Polygonverlauf aufweist.

7. Werkzeug (1) nach Anspruch 5 oder 6, wobei der Anfurchbereich (15) mittels eines Übergangsbereichs in den Bereich der Drückstollenspitze (8) übergeht und/oder wobei der Bereich der Drückstollenspitze (8) mittels eines weiteren Übergangsbereichs in den Freibereich (16) übergeht.

8. Werkzeug (1) nach einem der vorhergehenden Ansprüche, wobei der Formungsbereich (5) einen Formgebungsbereich (3) und einen Kalibrierbereich (4) umfasst, wobei die Formgebungskurve im Formgebungsbereich (3) insbesondere einen bis drei Umläufe aufweist und die Formgebungskurve im Kalibrierbereich (4) insbesondere zwei bis zwanzig, vorzugsweise fünf bis zehn Umläufe aufweist und wobei insbesondere der Kalibrierbereich kegelförmig ist.

9. Verfahren zur spanlosen Erzeugung oder Nachbearbeitung eines Gewindes, insbesondere Kugelgewindes, vorzugsweise eines Innengewindes, mit einem Werkzeug (1) nach einem der vorhergehenden Ansprüche, wobei das Gewinde eine Gewindesteigung mit einem Steigungswinkel (a) aufweist ,wobei ein erzeugter Gewindegang in einem die Werkzeugachse enthaltenden Schnitt zumindest abschnittsweise rundbogenförmig oder spitzbogenförmig ist.

10. Verfahren nach Anspruch 9, wobei das Gewinde vorgeschnitten und dann nachgeformt wird.

11. Verfahren zum Herstellen eines Werkzeugs (1) nach einem der Ansprüche 1 bis 8 zur spanlosen Erzeugung oder Nachbearbeitung eines Gewindes, insbesondere Kugelgewindes, in oder an einem Werkstück, insbesondere Gewindefurcher oder Gewindeformer, wobei das Verfahren ausgewählt ist aus:
a) Bereitstellen eines Rohlings und Ausfräsen oder Schneiden der Drückstollen;
b) Bereitstellen eines Schaftes und Aufbauen der Drückstollen mit einem additiven Verfahren, insbesondere 3-D-Drucken.

## Claims

1. Tool (1) for chipless production or reworking of a thread, in particular a ball screw thread, in or on a workpiece, in particular a thread cutter or thread former, comprising at least one forming region (5) which can be rotated or rotates about a tool axis (A) for chipless production or reworking of the thread, in particular an internal thread,
wherein the forming region (5) has a plurality of pressing studs (7, 7a, 7b, 7c) projecting radially outwards away from the tool axis (A) for producing or reworking the thread by pressing the pressing studs (7, 7a, 7b, 7c) into the workpiece surface,
wherein the pressing studs (7, 7a, 7b, 7c) are arranged in succession along a shaping curve (6) spiraling around the tool axis (A), and
whereby the gradient of the shaping curve (6) corresponds to the gradient of the thread to be produced or reworked,
wherein the shaping curve has a slope angle (α), and
wherein a profile of at least one pressing stud (7, 7a, 7b, 7c) is at least in sections round-arched or ogival in an axial section containing the tool axis (A), wherein the pressing studs (7, 7a, 7b, 7c) are arranged in at least two pressing webs (9, 10),
**characterized in that**
one of the at least two pressing webs (9, 10) is a first pressing web (9) and another is a second pressing web (10), wherein the second pressing web (10) is longer along the shaping curve (6) than the first pressing web or webs (9), wherein the second pressing web (10) has a length of 1.5 - 2.5 times the swept angle θ than the shorter first pressing webs (9).

2. Tool (1) according to claim 1, wherein, in particular, the profile of the at least one pressing stud in the region of a pressing stud tip (8) is round-arched or ogival, in particular cylindrical, in an axial section containing the tool axis (A).

3. Tool (1) according to claim 2, wherein the profile of one or more or all of the pressing studs (7, 7a, 7b, 7c) is selected from one of the following profiles: Round arch-shaped, pointed arch-shaped, pointed arch-shaped with rounded tip, pointed arch-shaped with a first radius in the region of the tip and a second radius in the region of the flanks, pointed arch-shaped with extended legs.

4. Tool (1) according to one of the preceding claims, wherein the tool (1) comprises in particular two or three or four or five or six or more pressing studs (7, 7a, 7b, 7c).

5. Tool (1) according to one of the preceding claims, wherein the tool (1) has cooling channels (12), which in particular each have an outlet opening in a shaft-side section of the forming region (5).

6. Tool (1) according to one of the preceding claims, wherein at least a part of the pressing studs (7, 7a, 7b, 7c) has a piercing region (15) and/or has a free region (16), wherein optionally the piercing region (15) and/or free region (16) has a polygonal course.

7. Tool (1) according to claim 5 or 6, wherein the piercing region (15) merges into the region of the pressing stud tip (8) by means of a transition region and/or wherein the region of the pressing stud tip (8) merges into the free area (16) by means of a further transition region.

8. Tool (1) according to one of the preceding claims, wherein the forming region (5) comprises a shaping region (3) and a calibrating region (4), wherein the shaping curve in the shaping region (3) has in particular one to three revolutions and the shaping curve in the calibrating region (4) has in particular two to twenty, preferably five to ten revolutions and wherein in particular the calibrating region is conical.

9. Method for chipless production or reworking of a thread, in particular a ball screw thread, preferably an internal thread, with a tool (1) according to one of the preceding claims, wherein the thread has a thread pitch with a pitch angle (α), wherein a produced thread in a cut containing the tool axis is at least in sections round-arched or ogival.

10. Method according to claim 9, wherein the thread is pre-cut and then formed.

11. Method for producing a tool (1) according to one of claims 1 to 8 for chipless production or reworking of a thread, in particular a ball screw thread, in or on a workpiece, in particular a thread cutter or thread former, wherein the method is selected from:
a) Providing of a blank and milling or cutting of the pressing studs;
b) Providing a socket and building up the pressing studs using an additive process, in particular 3D printing.

## Revendications

1. Outil (1) pour la réalisation ou le réusinage sans enlèvement de copeaux d'un filet, en particulier d'un filet à billes, dans ou sur une pièce, en particulier taraud ou taraud par déformation, comprenant au moins une zone de formage (5) pouvant tourner ou tournant autour d'un axe d'outil (A) pour la réalisation ou le réusinage sans enlèvement de copeaux du filet, en particulier d'un filet intérieur,
dans lequel la zone de formage (5) présente plusieurs barrettes de pression (7, 7a, 7b, 7c) faisant saillie radialement vers l'extérieur en s'éloignant de l'axe d'outil (A) ou faisant saillie pour produire ou retravailler le filetage en enfonçant les barrettes de pression (7, 7a, 7b, 7c) dans la surface de la pièce à usiner,
les tasseaux de pression (7, 7a, 7b, 7c) étant disposés les uns à la suite des autres le long d'une courbe de formage (6) entourant en spirale l'axe (A) de l'outil, et
la pente de la courbe de formage (6) correspondant à la pente du filet à produire ou à retoucher,
la courbe de mise en forme ayant un angle de pente (α), et
un profil d'au moins une barre de pression (7, 7a, 7b, 7c) étant au moins par sections en forme d'arc de cercle ou en forme d'ogive dans une section axiale contenant l'axe d'outil (A), les barres de pression (7, 7a, 7b, 7c) étant disposées dans au moins deux barrettes de pression (9, 10),
**caractérisé en ce que**
l'une des au moins deux barrettes de pression (9, 10) est une première barre de pression (9) et une autre est une deuxième barre de pression (10), la deuxième barre de pression (10) étant plus longue le long de la courbe de formage (6) que la ou les premières barres de pression (9), la deuxième barre de pression (10) ayant une longueur de 1,5 à 2,5 fois l'angle balayé θ que les premières barres de pression plus courtes (9).

2. Outil (1) selon la revendication 1, dans lequel en particulier le profil de l'au moins une tige de repoussage dans la zone d'une pointe de tige de repoussage (8) est en forme d'arc de cercle ou en forme d'ogive, en particulier en forme de cylindre, dans une section d'axe contenant l'axe (A) de l'outil.

3. Outil (1) selon la revendication 2, dans lequel le profil d'une, de plusieurs ou de toutes les barres de pression (7, 7a, 7b, 7c) est choisi parmi les profils suivants: En arc de cercle, en ogive, en ogive avec pointe arrondie, en ogive avec un premier rayon au niveau de la pointe et un deuxième rayon au niveau des flancs, en ogive avec branches prolongées.

4. Outil (1) selon l'une quelconque des revendications précédentes, dans lequel l'outil (1) comprend notamment deux ou trois ou quatre ou cinq ou six ou plus de tasseaux de repoussage (7, 7a, 7b, 7c).

5. Outil (1) selon l'une quelconque des revendications précédentes, dans lequel l'outil (1) comporte des canaux de refroidissement (12), qui comportent notamment chacun une ouverture de sortie dans une partie côté tige de la zone de moulage (5).

6. Outil (1) selon l'une quelconque des revendications précédentes, dans lequel au moins une partie des galeries de repoussage (7, 7a, 7b, 7c) présente une zone de rabattement (15) et/ou une zone de dégagement (16), optionnelle-ment la zone de rabattement (15) et/ou la zone de dégagement (16) présente un tracé polygonal.

7. Outil (1) selon la revendication 5 ou 6, dans lequel la zone de perçage (15) se prolonge par une zone de transition dans la zone de la pointe de la barre de pression (8) et/ou dans lequel la zone de la pointe de la barre de pression (8) se prolonge par une autre zone de transition dans la zone de la pointe de la barre de pression (8) zone de transition dans la zone libre (16).

8. Outil (1) selon l'une quelconque des revendications précédentes, dans lequel la zone de formage (5) comprend une zone de formage (3) et une zone de calibrage (4), la courbe de formage dans la zone de formage (3) présentant notamment de un à trois tours et la courbe de formage dans la zone de calibrage (4) présentant notamment de deux à vingt tours, de préférence de cinq à dix tours, et la zone de calibrage étant notamment de forme conique.

9. Procédé pour la production ou le réusinage sans enlèvement de copeaux d'un filet, en particulier d'un filet sphérique, de préférence d'un filet intérieur, avec un outil (1) selon l'une des revendications précédentes, le filet présentant un pas de filet avec un angle d'hélice (α), un pas de filet produit dans une coupe contenant l'axe de l'outil étant au moins par sections en forme d'arc de cercle ou d'ogive.

10. Procédé selon la revendication 9, dans lequel le filetage est prédécoupé puis postformé.

11. Procédé de fabrication d'un outil (1) selon l'une des revendications 1 à 8 pour la production ou le réusinage sans enlèvement de copeaux d'un filet, en particulier d'un filet à billes, dans ou sur une pièce à usiner, en particulier un taraud ou un taraud par déformation, le procédé étant choisi parmi:
a) Mise à disposition d'une ébauche et fraisage ou découpe des tasseaux de poussée;
b) Préparation d'une tige et construction des tasseaux de pression par un procédé additif, en particulier par impression 3D.
